# EUROPEAN PATENT APPLICATION

(11) **EP 4 685 678 A2**
(43) Date of publication of application: **28.01.2026**
(21) Application number: 25191993.2
(22) Date of filing: 25.07.2025
(51) Int. Cl.: G06F 21/41

(54) **SYSTEM AND METHOD FOR NATIVE USER ACCOUNT CREATION, ACCESS, AND MANAGEMENT**

(30) Priority: 26.07.2024 US 202463676079 P
(71) Applicant: Shavers, Connor W., Edmond, OK 73013 (US); Shavers, Brandon H, Edmond, OK 73025 (US)
(72) Inventor: Shavers, Connor W., Edmond, OK 73013 (US); Shavers, Brandon H, Edmond, OK 73025 (US)
(74) Representative: Murgitroyd & Company

(57) **Abstract**

A system comprises a processor and a memory. The memory comprises a non-transitory medium storing processor-executable instructions that when executed by the processor, causes the processor to: receive an indication from a user to create a native user account with a third-party system; determine if the user has an account profile registered with an authentication system; register the account profile if not already registered; determine if the user is authenticated with the authentication system; generate a user account for the third-party system with user account properties; and transmit the user account properties to the third-party system to create the native user account. The creation of the native user account may be accomplished without requesting additional input from the user beyond providing the indication.

## Description

### CROSS-REFERENCE TO RELATED APPLICATIONS

The present application is a non-provisional application claiming priority to U.S. Provisional Application No. 63/676,079, filed on July 26, 2024, the entire content of which is hereby incorporated by reference herein in its entirety.

### BACKGROUND

In the modern digital landscape, users frequently encounter websites and online services that require the creation of user accounts to access various features or complete transactions. For example, when a user navigates to an e-commerce website, they may be required to create a user account before completing a purchase. Similarly, social media platforms often mandate account creation for users to interact with content or connect with other users. This proliferation of account requirements across different websites and services has led to a significant challenge for users who must manage multiple accounts, each with its own set of credentials and profile information.

The traditional method of manually creating user accounts for each website or service is both time-consuming for users and resource-intensive for the websites to manage. Users must repeatedly enter similar personal information, create, and remember unique passwords, and navigate through various account creation processes. This repetitive task not only frustrates users but also increases the likelihood of users providing inconsistent or inaccurate information across different platforms. From the perspective of website operators, managing these user accounts becomes increasingly complex, particularly when users need to update their profile information, recover forgotten passwords, or address issues related to incorrect data entry. Moreover, traditional methods using single sign-on services do not allow users to access website accounts if the user closes their single sign-on account.

Furthermore, the manual account creation process poses security risks, as users may resort to using weak passwords or reusing the same password across multiple sites to simplify account management. This practice significantly increases the vulnerability of user accounts to unauthorized access and potential data breaches. Additionally, the dispersion of personal information across numerous platforms raises privacy concerns, as users may lose track of where their data is stored and how it is being used.

### SUMMARY

Thus, a need exists for a more efficient, secure, and user-friendly approach to user account creation and management in the digital ecosystem.

The problem of needing a more efficient, secure, and user-friendly approach to user account creation and management is solved by the systems and methods herein disclosed. The systems and methods include a system comprising a processing component, an input device, an output device, and a memory. The memory comprises a non-transitory processor-readable medium storing processor-executable instructions that when executed by the processing component, causes the processing component to: receive an indication from a user, via the input device, to create a native user account with a third-party system; determine if the user has an account profile registered with an authentication system, the account profile having a plurality of profile properties, the plurality of profile properties including at least an email address; if the user does not have the account profile registered, register the account profile with the authentication system; if the user is registered, determine if the user is authenticated with the authentication system; generate a user account for the third-party system, the user account having user account properties; and transmit the user account properties to the third-party system to create the native user account on the third-party system.

The systems and methods further include a system comprising a processing component, an input device, an output device, and a memory. The memory comprises a non-transitory processor-readable medium storing processor-executable instructions that when executed by the processing component, causes the processing component to: receive an indication from a user, via the input device, to create a native user account with a third-party system; determine if the user has an account profile registered with an authentication system, the account profile having a plurality of profile properties, the plurality of profile properties including at least an email address; determine a registration status as one of registered and unregistered, wherein in response to the registration status being registered, register the account profile with the authentication system and wherein in response to the registration status being unregistered, determine an authentication status of the user with the authentication system; generate a user account for the third-party system, the user account having user account properties; and transmit the user account properties to the third-party system to create the native user account on the third-party system.

The systems and methods further include a system comprising a processing component, an input device, an output device, and a memory. The memory comprises a non-transitory processor-readable medium storing processor-executable instructions that when executed by the processing component, causes the processing component to: receive an indication from a user, via the input device, to log into a native user account with a third-party system; and in response to determining that an account profile for the user is authenticated to an authentication system, transmit a signal to the third-party system to cause the third-party system to request login credentials from the authentication system.

The systems and methods further include a method for managing user accounts across multiple third-party systems, the method comprising: receiving, by a processing component, an indication from a user to perform an account action with a third-party system, the account action being one of creating a native user account or logging into an existing native user account; determining, by the processing component, if the user has an authenticated account profile with an authentication system. If the account action is creating a native user account: generating a user account for the third-party system, the user account having user account properties based on profile properties from the authenticated account profile; and transmitting the user account properties to the third-party system to create the native user account. If the account action is logging into an existing native user account: transmitting a signal to the third-party system to request login credentials from the authentication system; and receiving a confirmation from the third-party system that the account action was successful; and updating a database of user account associations to reflect the account action performed with the third-party system.

Implementations of the above techniques include methods, apparatus, systems, and computer program products are described. One such computer program product is suitably embodied in a non-transitory computer-readable medium that stores instructions executable by one or more processors. The instructions are configured to cause the one or more processors to perform the above-described actions.

The details of one or more implementations of the subject matter of this specification are set forth in the accompanying drawings and the description below. Other aspects, features and advantages will become apparent from the description, the drawings, and the claims.

### BRIEF DESCRIPTION OF DRAWINGS

The accompanying drawings, which are incorporated in and constitute a part of this specification, illustrate one or more implementations described herein and, together with the description, explain these implementations. The drawings are not intended to be drawn to scale, and certain features and certain views of the figures may be shown exaggerated, to scale or in schematic in the interest of clarity and conciseness. Not every component may be labeled in every drawing. Like reference numerals in the figures may represent and refer to the same or similar element or function. In the drawings:
FIG. 1 is a diagram of an exemplary embodiment of hardware forming a system constructed in accordance with the present disclosure.
FIG. 2 is a diagram of an exemplary embodiment of a user device for use in the system of FIG. 1 constructed in accordance with the present disclosure.
FIG. 3 is a diagram of an exemplary embodiment of an authentication system of the system of FIG. 1 constructed in accordance with the present disclosure.
FIG. 4 is a process flow diagram of an exemplary embodiment of a native account creation process in accordance with the present disclosure.
FIG. 5A is a process flow diagram of an exemplary embodiment of a user registration process constructed in accordance with the present disclosure.
FIG. 5B is a process flow diagram of an exemplary embodiment of a user authentication process constructed in accordance with the present disclosure.
FIG. 6A is an illustration of an exemplary embodiment of the user device of FIG. 2 showing a first illustration of a sequence of an application interface constructed in accordance with the present disclosure.
FIG. 6B is an illustration of an exemplary embodiment of the user device of FIG. 2 showing a second illustration of a sequence of an application interface constructed in accordance with the present disclosure.
FIG. 7A is a screenshot of an exemplary embodiment of a registration form constructed in accordance with the present disclosure.
FIG. 7B is a screenshot of an exemplary embodiment of an account profile page constructed in accordance with the present disclosure.
FIG. 7C is a screenshot of an exemplary embodiment of an email management interface displayed on the user device of FIG. 2 and constructed in accordance with the present disclosure.
FIG. 8A is an illustration of an exemplary embodiment of the user device of FIG. 2 showing a first screen of a sequence of a signup interface having a quick response code and constructed in accordance with the present disclosure.
FIG. 8B is an illustration of an exemplary embodiments of the user device of FIG. 2 showing a second screen of a sequence of the signup interface of FIG. 8A constructed in accordance with the present disclosure.

### DETAILED DESCRIPTION

Before explaining at least one embodiment of the disclosure in detail, it is to be understood that the disclosure is not limited in its application to the details of construction, experiments, exemplary data, and/or the arrangement of the components set forth in the following description or illustrated in the drawings unless otherwise noted. The disclosure is capable of other embodiments or of being practiced or carried out in various ways. Also, it is to be understood that the phraseology and terminology employed herein is for purposes of description and should not be regarded as limiting.

As used in the description herein, the terms "comprises," "comprising," "includes," "including," "has," "having," or any other variations thereof, are intended to cover a non-exclusive inclusion. For example, unless otherwise noted, a process, method, article, or apparatus that comprises a list of elements is not necessarily limited to only those elements but may also include other elements not expressly listed or inherent to such process, method, article, or apparatus.

Further, unless expressly stated to the contrary, "or" refers to an inclusive and not to an exclusive "or". For example, a condition A or B is satisfied by one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the inventive concept. This description should be read to include one or more, and the singular also includes the plural unless it is obvious that it is meant otherwise. Further, use of the term "plurality" is meant to convey "more than one" unless expressly stated to the contrary.

As used herein, qualifiers like "substantially," "about," "approximately," and combinations and variations thereof, are intended to include not only the exact amount or value that they qualify, but also some slight deviations therefrom, which may be due to computing tolerances, computing error, manufacturing tolerances, measurement error, wear and tear, stresses exerted on various parts, and combinations thereof, for example.

As used herein, any reference to "one embodiment," "an embodiment," "some embodiments," "one example," "for example," or "an example" means that a particular element, feature, structure, or characteristic described in connection with the embodiment is included in at least one embodiment and may be used in conjunction with other embodiments. The appearance of the phrase "in some embodiments" or "one example" in various places in the specification is not necessarily all referring to the same embodiment, for example.

The use of ordinal number terminology (i.e., "first", "second", "third", "fourth", etc.) is solely for the purpose of differentiating between two or more items and, unless explicitly stated otherwise, is not meant to imply any sequence or order of importance to one item over another.

The use of the term "at least one" or "one or more" will be understood to include one as well as any quantity more than one. In addition, the use of the phrase "at least one of X, Y, and Z" will be understood to include X alone, Y alone, and Z alone, as well as any combination of X, Y, and Z.

Where a range of numerical values is recited or established herein, the range includes the endpoints thereof and all the individual integers and fractions within the range, and also includes each of the narrower ranges therein formed by all the various possible combinations of those endpoints and internal integers and fractions to form subgroups of the larger group of values within the stated range to the same extent as if each of those narrower ranges was explicitly recited. Where a range of numerical values is stated herein as being greater than a stated value, the range is nevertheless finite and is bounded on its upper end by a value that is operable within the context of the invention as described herein. Where a range of numerical values is stated herein as being less than a stated value, the range is nevertheless bounded on its lower end by a non-zero value. It is not intended that the scope of the invention be limited to the specific values recited when defining a range. All ranges are inclusive and combinable.

Circuitry, as used herein, may be analog and/or digital components, or one or more suitably programmed processors (e.g., microprocessors) and associated hardware and software, or hardwired logic. Also, "components" may perform one or more functions. The term "processing component," may include hardware, such as a processor (e.g., microprocessor), an application specific integrated circuit (ASIC), a field programmable gate array (FPGA), a central processing unit (CPU), a graphical processing unit (GPU), a neural processing unit (NPU), a tensor processing unit (TPU), a combination of hardware and software, software, and/or the like. In some embodiments, the processing component may be a virtual processing component, that is, the processing component may be virtualized, such as in a virtual computer or virtual machine. The term "processor" as used herein means a single processor or multiple processors working independently or together to collectively perform a task.

Software may include one or more computer readable instruction that when executed by one or more component, e.g., a processor, causes the component to perform a specified function. It should be understood that the algorithms described herein may be stored on one or more non-transitory computer-readable medium. Exemplary non-transitory computer-readable media may include a non-volatile memory, a random access memory (RAM), a read only memory (ROM), a CD-ROM, a hard drive, a solid-state drive, a flash drive, a memory card, a DVD-ROM, a Blu-ray Disk, a laser disk, a magnetic disk, an optical drive, combinations thereof, and/or the like. Such non-transitory computer-readable media may be electrically based, optically based, magnetically based, resistive based, and/or the like. Further, the messages described herein may be generated by the components and result in various physical transformations.

As used herein, the terms "network-based," "cloud-based," and any variations thereof, are intended to include the provision of configurable computational resources on demand via interfacing with a computer and/or computer network, with software and/or data at least partially located on a computer and/or computer network.

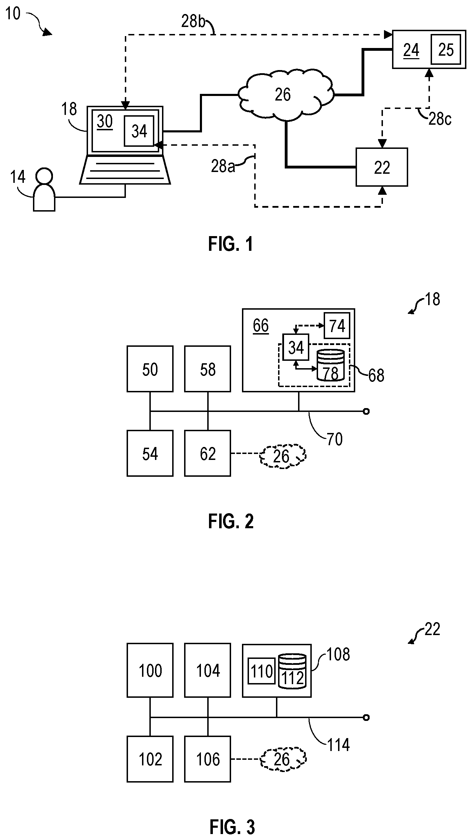

Referring now to the drawings, and in particular to FIG. 1, shown therein is a diagram of an exemplary embodiment of a system 10 constructed in accordance with the present disclosure. A user 14 may interact with the system 10 using a user device 18 that may be used to access an authentication system 22 and a third-party system 24 having a server plugin 25. The user device 18 may communicate with the authentication system 22 and/or with the third-party system 24 via a network 26. For example, the user device 18 may communicate with the authentication system 22 via a first connection 28a and/or may communicate with the third-party system 24 via a second connection 28b. The authentication system 22 may communicate with the third-party system 24 via a third connection 28c. The server plugin 25 may be a module of computer-programmable code executable by the third-party system 24 to enable third-party system 24 to communicate with the authentication system 22 and/or a plugin application 34.

In some embodiments, each connection 28 may be, for example, a secure and/or encrypted data link between two or more connected devices, such as the user device 18, the authentication system 22, and the third-party system 24. In one embodiment, each connection 28 may have the same, or different, security levels as another connection 28. Further, each connection 28 may permit bi-directional communication of information and/or data between the two or more connected devices. In some embodiments, the connections 28 may be established between particular software components of each of the connected devices, as described below in more detail.

In some embodiments, the network 26 may be the Internet and/or other network. For example, if the network 26 is the Internet, a primary user interface 30 (described below in more detail) of the system 10 may be delivered through a series of web pages, which may comprise, for example, hypertext markup language (HTML / PHP / JavaScript), and may be accessible by the user device 18. It should be noted that the primary user interface 30 of the system 10 may be another type of interface including, but not limited to, a Windows-based application, a tablet-based application, a mobile web interface, an iOS application, a macOS application, an Android application, an application running on a mobile device, a virtual-reality interface, an augmented-reality interface, and/or the like.

In one embodiment, the primary user interface 30 communicates with a plugin application 34 executing within the primary user interface 30 and/or otherwise executing in association with the primary user interface 30 as described below in more detail. In some embodiments, the plugin application 34 may be a browser extension, such as when the user device 18 is a desktop computer, laptop computer, or the like. In other embodiments, the plugin application 34 is an application, such as a mobile application installed on, or executed by, a tablet, a smart phone, an eReader, a VR/AR headset, a smart watch, combinations thereof, and/or the like.

The network 26 may be almost any type of network. For example, in some embodiments, the network 26 may be a version of an Internet network (e.g., exist in a TCP/IP-based and/or UDP network). In one embodiment, the network 26 is the Internet. It should be noted, however, that the network 26 may be almost any type of network and may be implemented as the World Wide Web (or Internet), a local area network (LAN), a wide area network (WAN), an LPWAN, a LoRa network (such as LoRaWAN), a metropolitan network, a wireless network, a WiFi network, a cellular network, a Bluetooth network, a Global System for Mobile Communications (GSM) network, a code division multiple access (CDMA) network, a 3G network, a 4G network, an LTE network, a 5G network, a satellite network, a radio network, an optical network, a cable network, a public switched telephone network, an Ethernet network, a short-wave wireless network, a long-wave wireless network, combinations thereof, and/or the like. It is conceivable that in the near future, embodiments of the present disclosure may use more advanced networking topologies.

The number of devices and/or networks illustrated in FIG. 1 is provided for explanatory purposes. In practice, there may be additional devices and/or networks, fewer devices and/or networks, different devices and/or networks, or differently arranged devices and/or networks than are shown in FIG. 1. Furthermore, two or more of the devices illustrated in FIG. 1 may be implemented within a single device, or a single device illustrated in FIG. 1 may be implemented as multiple, distributed devices. Additionally, or alternatively, one or more of the devices of system 10 may perform one or more functions described as being performed by another one or more of the devices of the system 10. Devices of the system 10 may interconnect via wired connections, wireless connections, or a combination thereof.

Referring now to FIG. 2, shown therein is a diagram of an exemplary embodiment of the user device 18 of the system 10 constructed in accordance with the present disclosure. In some embodiments, the user device 18 may include, but is not limited to, implementation as one or more of: a personal computer, a cellular telephone, a smart phone, a network-capable television set, a tablet computer, an e-reader, a laptop computer, a desktop computer, a network-capable handheld device, a server, a wearable network-capable device, a virtual reality / augmented reality device, combinations thereof, and/or the like.

In some embodiments, the user device 18 may include one or more input device 50 (hereinafter "input device 50"), one or more output device 54 (hereinafter "output device 54"), one or more processing component 58 (hereinafter "processing component 58"), one or more communication device 62 (hereinafter "communication device 62") capable of interfacing with the network 26, and one or more memory 66 (hereinafter "memory 66") storing the user application 74, as detailed below. The input device 50, output device 54, processing component 58, communication device 62, and memory 66 may be connected via a path 70 such as a data bus that permits communication among the components of user device 18. One or more element of the user device 18 may be partially or completely network-based or cloud-based, and may or may not be located in a single physical location.

The input device 50 may be capable of receiving information input from the user 14 and/or processing component 58, and transmitting such information to other components of the user device 18, e.g., via the path 70, and/or the network 26, e.g., via the communication device 62. The input device 50 may include, but is not limited to, implementation as a keyboard, a touchscreen, a mouse, a trackball, a microphone, a camera, a fingerprint reader, an infrared port, an optical port, a cell phone, a smart phone, a PDA, a remote control, a wearable communication device, a network interface, combinations thereof, and/or the like, for example. The primary user interface 30 may receive one or more input from the user 14 via the input device 50.

The output device 54 may be capable of receiving information from the processing component 58 and/or other components of the user device 18, e.g., via the path 70, and outputting such information in a form perceivable by the user 14 and/or processing component 58. Implementations of the output device 54 may include, but are not limited to, a computer monitor, a screen, a touchscreen, a speaker, a website, a television set, a smart phone, a PDA, a cell phone, a fax machine, a printer, a laptop computer, a haptic feedback generator, an olfactory generator, combinations thereof, and the like, for example. The primary user interface 30 may provide one or more output to the user via the output device 54.

It is to be understood that in some exemplary embodiments, the input device 50 and the output device 54 may be implemented as a single device, such as, for example, a touchscreen of a computer, a tablet, or a smartphone. It is to be further understood that as used herein the term user (e.g., the user 14) is not limited to a human being, and may comprise a computer, a server, a website, a processor, a network interface, a user terminal, a virtual computer, combinations thereof, and/or the like, for example.

The processing component 58 may be capable of communicating with and/or controlling each component of the user device 18 via the path 70. For example, the processing component 58 may be capable of communicating with and/or controlling the memory 66 via the path 70 (e.g., data bus). The processing component 58 may be capable of communicating with and/or controlling one or more of: the input device 50, the output device 54, and the communication device 62. Exemplary embodiments of the processing component 58 may include, but are not limited to, a digital signal processor (DSP), a central processing unit (CPU), a graphical processing unit (GPU), a neural processing unit (NPU), a tensor processing unit (TPU), a field programmable gate array (FPGA), a microprocessor, a multi-core processor, an application specific integrated circuit (ASIC), combinations thereof, and/or the like, for example.

In one embodiment, the processing component 58 may include one or more processing component 58 working together, or independently, and located locally, or remotely, e.g., accessible via the network 26. The processing component 58 may be implemented as a single processor or multiple processors working together, or independently, to execute processor-executable instructions as described herein. It is to be understood, that in certain embodiments using more than one processing component 58, the processing components 58 may be located remotely from one another, located in the same location, or comprise a unitary multi-core processor. In some embodiments, the processing component 58 may be implemented as a virtual processing component, that is, the processing component may be virtualized, such as in a virtual computer or virtual machine. The processing components 58 may be capable of reading and/or executing processor-executable instructions or code and/or capable of creating, manipulating, retrieving, altering, and/or storing data and/or data structures, such as into/from the memory 66.

The network 26 may interface, via the communication device 62 of the user device 18 with the authentication system 22 and/or the third-party system 24 in a variety of ways. The network 26 may permit bi-directional communication of information and/or data between the user device 18 and the authentication system 22 and/or the third-party system 24. For example, in some embodiments, the network 26 may interface by optical and/or electronic interfaces of the communication device 62, and/or may use a plurality of network topographies and/or protocols including, but not limited to, Ethernet, TCP/IP, UDP, circuit switched path, combinations thereof, and/or the like, as described above.

The memory 66 may be one or more non-transitory processor-readable medium storing processor-executable instructions that when executed by the processing component 58 cause the processing component 58 to perform one or more action as described herein. The memory 66 may be one or more memory 66 working together, or independently, to store processor-executable instructions / code and may be located locally or remotely, e.g., accessible via the network 26.

In some embodiments, the memory 66 may be located in the same physical location as the user device 18, and/or one or more memory 66 may be located remotely from the user device 18. For example, the memory 66 may be located remotely from the user device 18 and may communicate with the processing component 58 via the network 26. Additionally, in one embodiment, when more than one memory 66 is used, a first memory 66 may be located in the same physical location as the processing component 58, and a second memory 66 may be located in a location physically remote from the processing component 58. Additionally, the memory 66 may be implemented as a "cloud" non-transitory processor-readable medium (i.e., one or more memory 66 may be partially, or completely, based on, or accessed using, the network 26).

In one embodiment, the memory 66 may further comprise one or more secure memory 68. The secure memory 68 may be separate from the memory 66 or may be, for example, a secure portion of the memory 66. The secure memory 68 may, for example, provide that data stored in the secure memory 68 is encrypted at rest and, in some embodiments, may only be accessed by an approved software application, or, in some embodiments, a secure thread of the processing component 58. In this way, information stored within the secure memory 68 may not be accessed by a software application or other component of the user device 18 if not approved for access.

In one embodiment, the memory 66 may further store processor-executable instructions, such as the user application 74 and the plugin application 34. The plugin application 34 may be, for example, stored in the memory 66, and/or in the secure memory 68 or otherwise have access to the secure memory 68 and the memory 66, and may have a user profile and an authentication indicator indicative of whether the user profile is authenticated, with the authentication system 22, for example. The user application 74 may provide the primary user interface 30 and may include, for example, a web browser capable of accessing a website and/or communicating information and/or data over the network 26, and/or the like. The memory 66 may store the user application 74 that, when executed by the processing component 58, causes the user device 18 to perform an action such as communicate with or control one or more component of the user device 18 and/or, via the network 26, the authentication system 22 and/or the third-party system 24.

In some embodiments, the memory 66 may further store one or more database 78 (hereinafter "database" 78). The database 78 may be stored, for example, on the memory 66 and/or on the secure memory 68. Hereinafter, the database 78 may be referred to as being stored on the memory 66, however, such reference may further include storing the database 78 on the secure memory 68 in addition or, or alternatively to, storing the database 78 on the memory 66.

In one embodiment, the database 78 may be implemented as one or more of: a relational database, a time-series database, a vector database, a non-relational database, a document database, and/or the like or a combination thereof. Examples of such databases may include: DB2^{®}, Microsoft^{®} Access, Microsoft^{®} SQL Server, Oracle^{®}, MySQL, PostgreSQL, MongoDB, Apache Cassandra, Weaviate, and the like. It should be understood that these examples have been provided for the purposes of illustration only and should not be construed as limiting the presently disclosed inventive concepts. In some embodiments, the database 78 may be centralized or distributed across multiple network-connected systems, that is, the database 78 may be partially or completely network-based or cloud-based, and may or may not be located in a single physical location.

Referring now to FIG. 3, shown therein is a diagram of an exemplary embodiment of the authentication system 22 constructed in accordance with the present disclosure. In the illustrated embodiment, the authentication system 22 is provided with one or more input device 100 (hereinafter "input device 100"), one or more output device 102 (hereinafter "output device 102"), one or more processing component 104 (hereinafter "processing component 104"), one or more communication device 106 (hereinafter "communication device 106") capable of interfacing with the network 26, and one or more memory 108 (hereinafter "memory 108") storing a server application 110, as detailed below. Each element of the authentication system 22 may be partially or completely network-based or cloud-based, and may or may not be located in a single physical location.

In one embodiment, the input device 100 may transmit data to the processing component 104 and may be implemented in accordance with the input device 50 of the user device 18 described above in more detail. The input device 100 may be located in the same physical location as the processing component 104, or located remotely and/or partially or completely network-based. In one embodiment, the output device 102 of the authentication system 22 may transmit information from the processing component 104 to the user 14, and may be constructed in accordance with the output device 54 of the user device 18 as detailed above. The output device 102 may be located with the processing component 104, or located remotely and/or partially or completely network-based.

Exemplary embodiments of the processing component 104 may be constructed similar to and in accordance with the processing component 58 described above in more detail. The processing component 104 may be capable of communicating with the memory 108 via a path 114 (e.g., data bus). The processing component 104 may be capable of communicating with the input device 100 and/or the output device 102.

The processing component 104 may be implemented as a single processor or multiple processors working together, or independently, to execute the server application 110 as described herein. It is to be understood, that in certain embodiments using more than one processing component 104, the processing components 104 may be located remotely from one another, located in the same location, or comprising a unitary multi-core processor. The processing components 104 may be capable of reading and/or executing processor-executable code and/or capable of creating, manipulating, retrieving, altering, and/or storing data structures into the memory 108 such as in a database 112.

The processing component 104 may be further capable of interfacing and/or communicating with the user device 18 via the network 26 using the communication device 106. For example, the processing component 104 may be capable of communicating via the network 26 by exchanging signals (e.g., analog, digital, optical, and/or the like) via one or more port (e.g., physical or virtual ports) using a network protocol to provide updated information to the user application 74 or the primary user interface 30 executed on the user device 18.

The memory 108 may store processor-executable code and/or information comprising the database 112 and the server application 110. In some embodiments, the server application 110 may be stored as a compiled application file, such as an executable file, for example, or in a structured (or unstructured) format, such as, e.g., in a non-compiled file. In one embodiment, the server application 110 may comprise an authentication API to enable the third-party system 24 to communicate with the authentication system 22, e.g., via the third connection 28c.

In some embodiments, the memory 108 may be located in the same physical location as the authentication system 22, and/or one or more memory 108 may be located remotely from the authentication system 22. For example, the memory 108 may be located remotely from the authentication system 22 and communicate with the processing component 104 via the network 26. Additionally, when more than one memory 108 is used, a first memory 108 may be located in the same physical location as the processing component 104, and additional memory 108 may be located in a location physically remote from the processing component 104. Additionally, the memory 108 may be implemented as a "cloud" non-transitory processor-readable medium (i.e., one or more memory 108 may be partially or completely based on or accessed using the network 26).

In one embodiment, the database 112 can be a relational database, a time-series database, a vector database, a non-relational database, or the like. Examples of such databases comprise, DB2^{®}, Microsoft^{®} Access, Microsoft^{®} SQL Server, Oracle^{®}, MySQL, PostgreSQL, MongoDB, Apache Cassandra, Weaviate, and the like. It should be understood that these examples have been provided for the purposes of illustration only and should not be construed as limiting the presently disclosed inventive concepts. The database 112 can be centralized or distributed across multiple systems.

As the user 14 navigates the Internet, the user 14 may encounter a website on which the user 14 is expected to create a user account for that website prior to completing a particular website transaction. For example, if the user 14 is navigating to an application interface 600 of an eCommerce website (e.g., a website or a webapp in communication with, or executed at least partially on, a third-party system 24), the user 14 may be required by the eCommerce website to create a first user account in order to complete a purchase transaction with the eCommerce website. Further, if the user 14 navigates to an application interface of a social media website (e.g., a third-party system 24), the user 14 may be required by the social media website to create a second user account in order to compose a post or interact with another user's post on the social media website. Traditional methods of manually creating native user accounts on each website requiring such a native user account is both time-consuming for the user, and resource intensive for website to manage, such as when the user 14 wants to change profile information, has entered incorrect information, requests a new password, forgets passwords, and the like.

As used herein, a native user account may be a user account for the user 14 established on the third-party system 24 and associated with login credentials that when received by the third-party system 24 may cause the third-party system 24 to log the user 14 into the third-party system 24 using the native user account (e.g., a user name and password, a passkey, and/or the like). The native user account may be under the control and administration of the third-party system 24. The native user account may not require communication with the authentication system 22 for account maintenance and administration. For example, the third-party system 24 having the native user account does not need an API key, token, or other authorization indicator to verify, authenticate, authorize, or set permissions for the native user account. In one embodiment, a native user account is a user account for the third-party system that is managed by the third-party system. For example, in some embodiments, a Single-Sign on (SSO) account is not a native user account on a third-party system (when the third-party system is not the SSO system), e.g., the SSO account is not native / managed by to the third-party system. For example, when a user wants to log into a particular website, the user may provide an email and password to the website in order to log into a native account. However, when using an SSO account to log into the website, the user is not logging into a native account because the website does not control authentication of the user - the SSO system does.

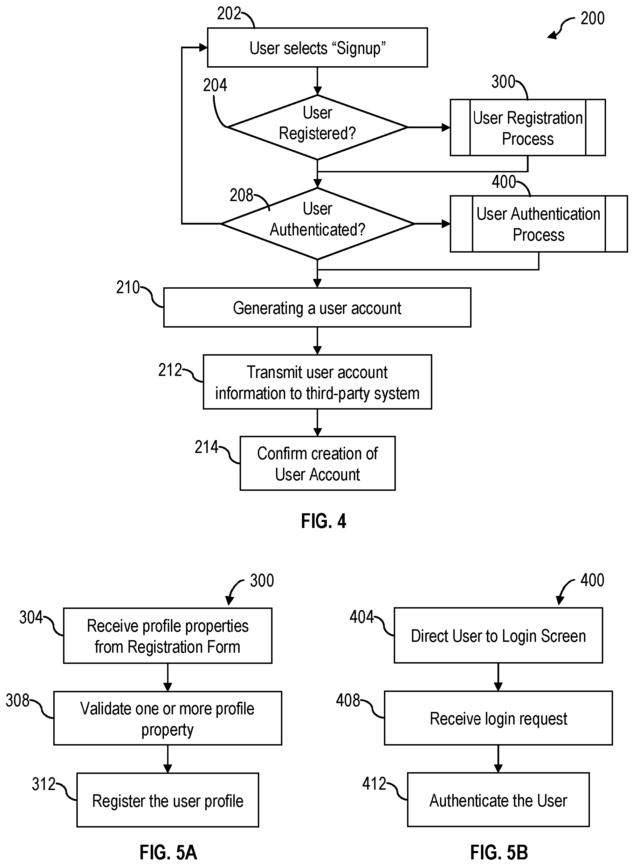

Referring now to FIG. 4, shown therein is a flow diagram of an exemplary embodiment of a native account creation process 200 constructed in accordance with the present disclosure. The native account creation process 200 generally comprises the steps of: the user indicating to create the native user account (step 202); determining if the user is already registered (step 204); if the user is unregistered, registering the user (e.g., via user registration process 300), if the user is registered, continuing to determining if the user is authenticated (step 208), if the user is not authenticated, authenticating the user (e.g., via user authentication process 400), but if the user is authenticated, continuing to receiving a request for account information (step 210), transmitting the generated user profile to the third-party system (step 212), and confirming creation of the native user account (step 214).

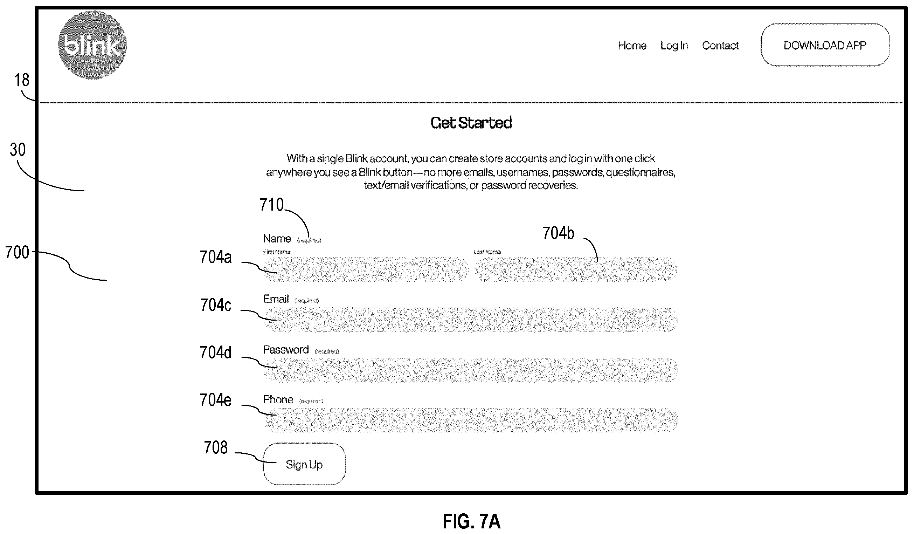

In one embodiment, the user indicating to create a native user account (step 202) may include the processing component 58 of the user device 18 receiving an indication from the user 14 via the input device 50. For example, the user 14 may interact with the primary user interface 30 of the user device 18 to select a "Signup" button 604 on an application interface 600 (e.g., as described below and shown in FIG. 7A) provided by the third-party system 24. The "Signup" button may be, for example, communicably coupled to the server plugin 25 provided to the third-party system 24 and enabling the third-party system 24 to communicate with the authentication system 22, e.g., via the third connection 28c and/or the authentication API. For example, the third-party system 24 may transmit a user account generation request to the authentication system 22.

In one embodiment, the user indicating to create the native user account (step 202) may include the processing component 58 of the user device 18 receiving an input from the user 14 indicative of selection of the "Signup" button 604 on the application interface 600 via the primary user interface 30. After selection, the processing component 58 may cause the output device 54 to display an indication that the selection is being responded to.

In one embodiment, determining if the user is already registered (step204) may include the processing component 58 determining whether the plugin application 34 is installed on the user device 18 (e.g., stored in the memory 66 as processor-executable code) or otherwise executable by the processing component 58. If the plugin application 34 is not available for execution by the processing component 58, the processing component 58 may send a download request to the authentication system 22 to cause the user device 18 to download and/or install the plugin application 34. In one embodiment, if the plugin application 34 is not available, the processing component 58 may display a notification on the output device 54 indicating to the user 14 to select the button 604 after the user 14 has installed and/or logged into the plugin application 34.

In one embodiment, determining if the user is already registered (step204) may include determining if the user is already registered with the authentication system 22. The processing component 58 may execute the plugin application 34 to attempt to retrieve an account profile for the user 14 from the second memory 66, such as from the secure memory 68. The account profile may include one or more profile properties, such as, for example, a profile ID, a username, a user's name, an email address, a phone number, one or more user account, a birthday, combinations thereof, and/or the like. The account profile may include, for example, data stored by the plugin application 34 and/or the server application 110 and associated with a particular user 14.

In one embodiment, determining if the user is already registered (step204) may include registering the account profile with the authentication system in response to determining that the user does not have the account profile registered. In one embodiment, determining if the user is already registered (step204) may include determining a registration status being, for example, one of: registered and unregistered.

In one embodiment, if the user is unregistered, registering the user may include proceeding to a user registration process 300 (described below and shown in FIG. 5).

In one embodiment, if the user is registered (e.g., has a registration status of registered), continuing to determining if the user is authenticated (step 208) may include, for example, determining whether the user 14 is authenticated through the plugin application 34. For example, determining if the user is authenticated (step 208) may include determining whether the user 14 is authenticated with the plugin application 34 executed by the processing component 58 of the user device 18 by, in one embodiment, querying the plugin application 34 to determine if an authenticated user is logged in and is authenticated.

In one embodiment, if the user is registered, continuing to determining if the user is authenticated (step 208) may include, for example, determining an authentication status of the user with the authentication system in response to determining that the user is registered. In one embodiment, determining if the user is authenticated (step 208) may include, for example, determining an authenticated status being one of: authenticated and not authenticated.

In one embodiment, determining if the user is authenticated (step 208) may be performed only on the user device 18 without interfacing with the authentication system 22 or with the third-party system 24.

In one embodiment, if the user is not authenticated, authenticating the user may include proceeding to a user authentication process 400 (described below and shown in FIG. 5B).

If the user is authenticated, the native account creation process 200 may continue to generating a user account (step 210). In one embodiment, generating the user account (step 210) may further include the processing component 104 receiving a communication from the third-party system 24 indicative of a request for user account information. The processing component 104 may compile the requested user account information, e.g., by retrieving one or more profile property from the account profile of the user 14, and save the requested user account information as a user account in the memory 108. The processing component 104 may further connect to the third-party system 24 via the network 26, such as via the authentication API of the third connection 28c, and may transmit, to the third-party system 24, the requested user account information. In one embodiment, the requested user information may include required account properties and optional account properties, and, in some embodiments, may further include a complexity requirement for one or more account property (as discussed in more detail below).

This nonconventional arrangement of the authentication system 22 transmitting the user account information to the third-party system 24 if the user is authenticated on the user device 18 (instead of the conventional arrangement of the third-party system 24 receiving the user information from the user 14 interacting with the primary user interface 30), may further enable a secure and user-friendly approach to user account creation and management on the third-party system 24.

In one embodiment, the third-party system 24 may receive and parse the received user account information and compare one or more user account properties against native user accounts to determine if the user 14 already has a native user account with the third-party system 24. For example, the third-party system 24 may compare a first name, a last name, and a phone number against native user accounts of the third-party system 24 and, if a preexisting native user account is found, may transmit the preexisting native user account (and user account information) to the authentication system 22 to cause the authentication system 22 to associate the preexisting native user account information with the third-party system 24, such as by storing the preexisting native user account information in the memory 108 (or the database 112).

In one embodiment, generating a user account (step 210) may include the processing component 104 retrieving one or more profile property from the account profile of the user 14 and generating user account information for the third-party system 24 based on the one or more profile property. In one embodiment, generating the user account (step 210) further includes the processing component 104 connecting to the third-party system 24, such as via the third connection 28c within the network 26, to identify requested user account information.

The requested account properties may include, for example, required account information and optional account information for the native user account. The requested account information may further include, for example, requirements of the requested user account information (e.g., password complexity rules). The processing component 104 may then generate the user account having the user account properties based on the requested user account information and in accordance with the requirements of the requested user account information. For example, if a password is received as a requested user account information and has particular complexity rules, the processing component 104 may generate a password as a user account property for the user account, where the generated password meets the particular complexity rules. In one embodiment, the processing component 104 may generate required user account information and optional user account information; however, in other embodiments, the processing component 104 may generate required user account information and not optional user account information. In this way, the processing component 104 may reduce complexity and data requirements of the user account and user account properties, thereby protecting privacy of the user 14 while ensuring that minimum requirements for a user account on the third-party system 24 are met by the generated user account information. In some embodiments, certain of the user account properties, for example, the password, a username, an email address, and/or the like, may be considered login credentials.

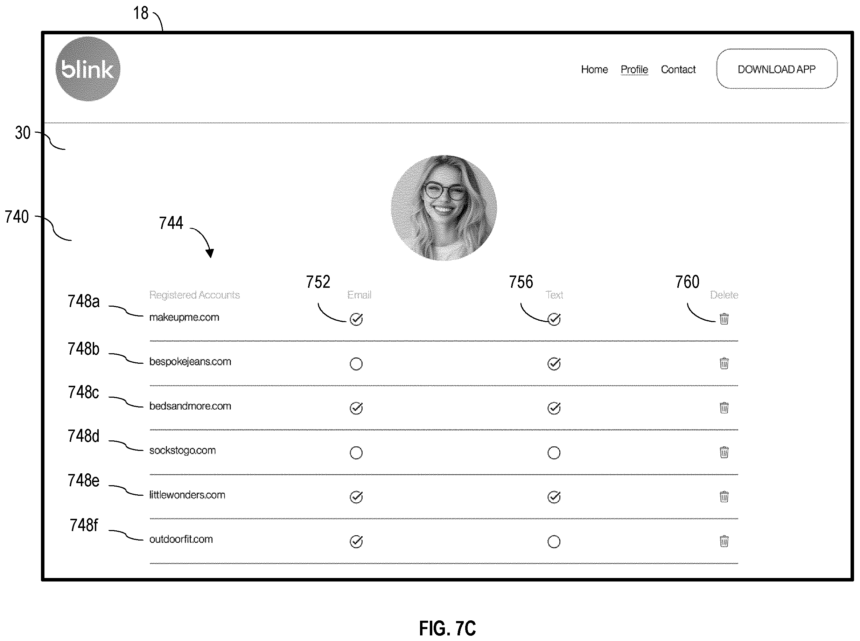

In one embodiment, generating the user account (step 210) further includes the processing component 104 generating the user account information based on the one or more profile property from the account profile of the user 14, but different from the one or more profile property of the account profile. For example, in some embodiments, the processing component 104 may receive a requested user account information that includes an email address. The processing component 104 may then generate a user account email address, different from the email address of the profile properties of the account profile, to include with the user account (e.g., as a user account property) in the requested user account information. In some embodiments, the user account email address may be an email address that is uniquely generated for that particular third-party system 24. For example, each user account email address, for each user account, may be a proxy email address whereby emails received by the proxy email address are filtered (e.g., based on the email address) and/or forwarded to the email address associated with that particular account profile (e.g., to the email address provided as the profile property). Additionally, or alternatively, the proxy email addresses may filter and/or forward received emails to a profile email account hosted by the authentication system 22 (and able to be managed by the user 14 as described below and shown in FIG. 7C).In one embodiment, the processing component 104 may generate a proxy email address different from the email address of the user in the one or more profile properties of the account profile. The proxy email address being uniquely generated for the third-party system (for example, the email address may be random characters, such as a GUID. The proxy email address may then be provided as at least one of the user account properties of the user account.

In one embodiment, transmitting the user account to the third-party system (step 212) includes the processing component 104, executing the server application 110, transmitting the requested user account information (e.g., the user account and user account properties) of the generated user account to the third-party system 24, e.g., via the third connection 28c. The processing component 104 may transmit the user account information to the third-party system 24 via the network 26, for example.

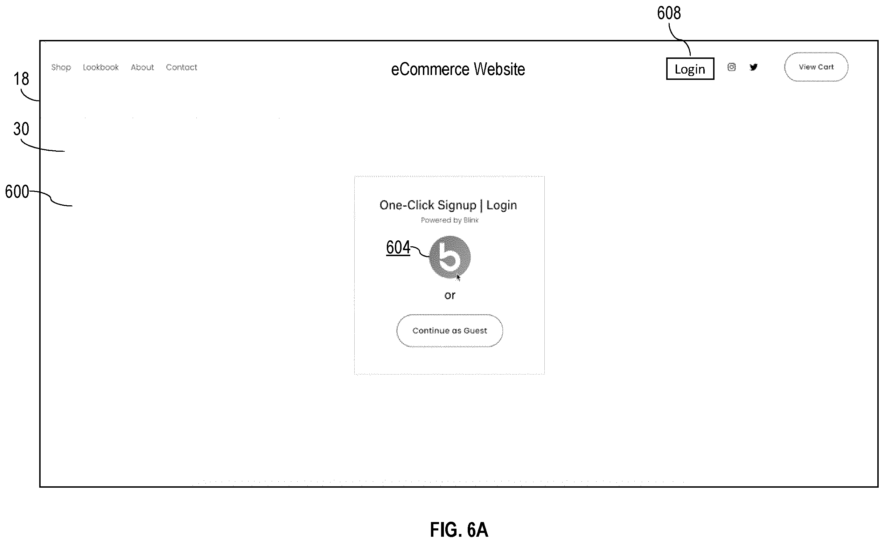

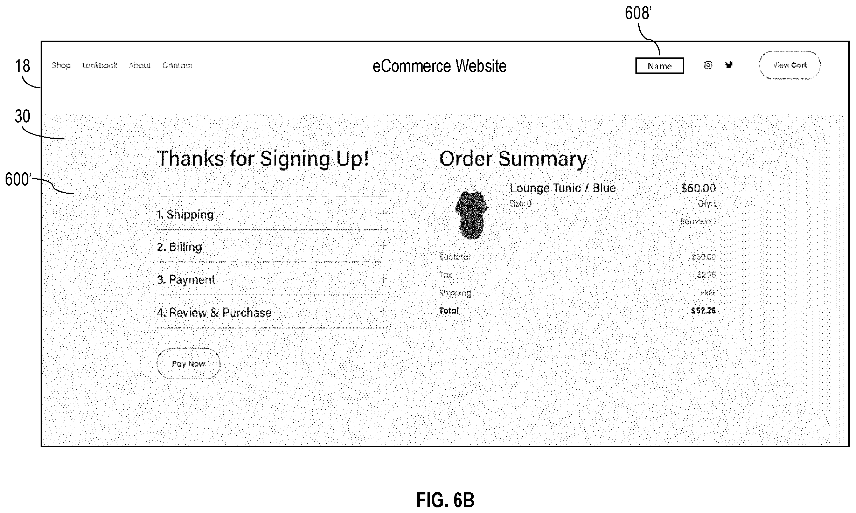

In one embodiment, transmitting the user account to the third-party system (step 212) includes the third-party system 24 not requiring that the user 14 interact with the third-party system 24 to complete user account verification steps. For example, as shown in FIGS. 6A-B, after selecting the button 604 on the application interface 600, the primary user interface 30 may transition to show a logged-in application interface 600' having the user 14 signed into the application interface 600, without requiring user interaction with the primary user interface 30 after selection of the button 604.

In one embodiment, confirming creation of the native user account (step 214) may include the processing component 58 receiving an indication from the third-party system 24 that the user 14 has successfully logged into the third-party system 24. For example, as shown in FIGS. 6A-B, a login indicator 608 may change from "login" in the application interface 600 to a login indicator 608' displaying "Name" (e.g., the user's name the third-party system 24 received in the requested user account information) in the logged-in application interface 600'. Additionally, the logged-in application interface 600' may display one or more message 612 indicating to the user 14 indicating that the user 14 now has a native user account with the third-party system 24.

In one embodiment, confirming creation of the native user account (step 214) may include, for example, the processing component 104 receiving a response from the third-party system 24 after transmitting the user account information. For example, the processing component 104 may receive a success signal from the third-party system 24 indicative of the third-party system 24 successfully creating a user account on the third-party system 24 based on the transmitted user account.

In one embodiment, confirming creation of the native user account (step 214) may include, for example, the processing component 104 receiving a response (or, e.g., a confirmation) from the third-party system 24 indicative of successfully creating the native user account in the third-party system 24 and, in response, the processing component 58 receiving a redirection to a confirmation page indicative of successful creation of the user account.

In one embodiment, upon confirming creation of the native user account (step 214), the processing component 104 may store the user account having the requested and/or generated user account information in the one or more memory 108, such as in secured memory, and associate the user account with the URL (or other resource identifier) of the third-party system 24.

In one embodiment, if the processing component 104 receives the success signal indicative of a failure to create the native user account in the third-party system 24 based on the requested user account information, the processing component 104 may process such signal to identify a reason for the failure, and based on the failure reason, may return to step 210 to generate a new user account based on the required account properties and optional account properties as well as the failure reason (which may be utilized, for example, as a requested account property requirement, for example). In one embodiment, if the processing component 104 receives the success signal indicative of a failure to create the user account in the third-party system 24 based on the requested user account information multiple times, the processing component 104 may cause the processing component 58 to provide an indication of such failure, such as by causing the processing component 58 to draw, on the output device 54, an alert indicative of the failure to create the native user account, as well as, in some embodiments, the failure reason.

Referring now to FIG. 5A and FIG. 7A, in combination, shown in FIG. 5A is a process flow diagram of an exemplary embodiment of the user registration process 300 constructed in accordance with the present disclosure. The user registration process 300 generally includes the steps of: receiving profile properties from a registration form (step 304); validating one or more of the profile properties (step 308); and registering the account profile (step 312). Generally, the user registration process 300 may be executed by the processing component 104 as a series of steps programmed as processor-executable instructions stored in the memory 108.

In one embodiment, receiving profile properties from a registration form (step 304) may include the processing component 104 causing the processing component 58 to provide a registration form 700 in the primary user interface 30 of the user device 18 without closing or exiting from the application interface 600. For example, the processing component 58 may provide the registration form 700 in a separate window (e.g., if the primary user interface 30 is operating within an internet browser application) or may provide the registration form 700 within a mobile application installed on, or executed by, the user device 18. In one embodiment, selection of the button 604 on a first user device 18 may cause a second user device 18 to display the registration form 700 and/or download the mobile application.

In one embodiment, receiving profile properties from a registration form (step 304) may include the processing component 104 causing the processing component 58 to provide a registration form 700 in the primary user interface 30 of the user device 18 having one or more input field 704a-n corresponding to one or more profile property. The processing component 58 may then receive one or more input from the user 14 indicative of a response provided in the one or more input fields 704 and associated with the one or more profile property. The processing component 58 may transmit the response associated with the one or more profile property to the processing component 104, e.g., upon selection of a submit button 708 (shown with the text "Sign Up" in FIG. 7A) by the user 14. The processing component 104 may receive the one or more profile property from the processing component 58. For example, the one or more input field 704 may include a first input field 704a associated with a first name, a second input field 704b associated with a last name, a third input field 704c associated with an email address, a fourth input field 704d associated with a password, and a fifth input field 704e associated with a phone number. The processing component 58 may receive a response from the input fields 704a-e and transmit the received response to the processing component 104 as a particular profile property (e.g., a first name property, a last name property, an email address property, a password property, and an email address property, respectively) of the profile account. The processing component 104 may receive that particular profile properties and associate that particular profile properties with the profile account of the user 14.

In one embodiment, receiving profile properties from the registration form (step 304) may include the processing component 104 causing the processing component 58 to provide the registration form 700 having one or more input field 704a-n on the primary user interface 30 of the user device 18, each of the one or more input fields 704 having an optional indicator 710 and corresponding to one or more profile property. The optional indicator 710 may be, for example, shown as an asterisk next to the input field indicating to the user 14 that the particular input filed is not optional (e.g., must be completed), or may include text, such as "(required)" as shown in FIG. 7A.

In one embodiment, validating one or more of the profile properties (step 308) may include, for example, the processing component 58 validating the responses from the one or more input fields 704a-n to ensure that input fields 704 having an optional indicator indicative of a required field have been filled in by the user 14. In some embodiments, the processing component 58 may validate input fields having the optional indicator prior to transmitting the response to the processing component 104. In other embodiments, the processing component 104 may validate input fields having the optional indicator.

In one embodiment, validating one or more of the profile properties (step 308) may include, for example, the processing component 58 of the user device 18 validating the one or more profile property received via the registration form 700. For example, the one or more profile property may include a phone number (entered into the fifth input field 704e, for example) and/or an email address (entered into third input field 704c, for example). Validating the one or more profile property may include validating a format of the phone number and the email address to ensure that the data is provided having a correct format (e.g., that the phone number is 10 numeric digits long or 11 numeric digits long including a country code for users 14 having a phone number in the United States, or that the email address includes at least an "@" symbol, for example). In other embodiments, validating the one or more profile property may include, for example, transmitting the one or more profile property to the authentication system 22 and the processing component 104 of the authentication system 22 may send an email to the email address with a link for the user 14 to verify that the user 14 is in control of the provided email address and may similarly send a text or phone call to the phone number enabling the user 14 to confirm control of the provided phone number.

In one embodiment, validating one or more of the profile properties (step 308) may include, for example, the processing component 104 comparing the responses received from the one or more input field 704a-n to one or more profile property against profile properties stored in the memory 108, such as in the database 112 in order to determine whether the responses received from the one or more input fields 704 correspond to one or more profile property of an account profile that is already registered with the authentication system 22. For example, the processing components 58 may transmit the response from the one or more input fields 704 of the user 14 to the authentication system 22. The processing component 104 of the authentication system 22 may then compare the one or more profile property received in the response against data stored in the memory 108, such as in the database 112, to determine whether another account profile stored in the database 112 has the same or similar profile properties. For example, the processing component 104 may compare whether an email address (or phone number) provided as the one or more profile property, in the one or more input fields 704, corresponds to an already-registered account profile stored in the memory 108, e.g., stored in the database 112.

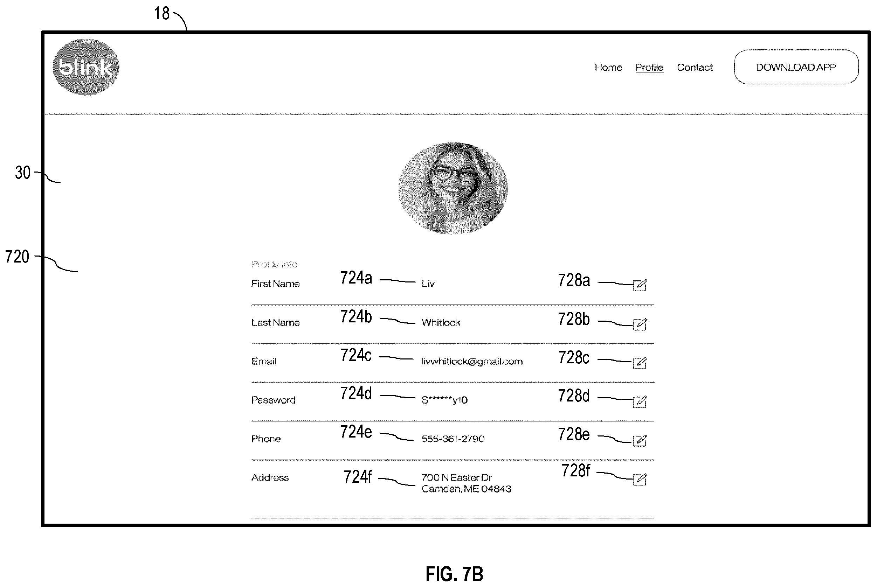

In one embodiment, registering the account profile (step 312) may include the processing component 58 causing the processing component 104 to register the account profile having the profile properties provided by the user 14 via the registration form 700. Registering the account profile may include, for example, the processing component 104 associating the account profile with the one or more profile properties, and storing the user profile in the memory 108 such as in the database 112. The account profile having the one or more profile properties may be shown to the user 14 via the primary user interface 30 of the user device 18, as illustrated in FIG. 7B. In one embodiment, after registering the user 14, via user registration process 300, if started from the native account creation process 200, may return to the authenticated user determination (step 208) of the native account creation process 200, described above.

In one embodiment, registering the account profile (step 312) further includes the processing component 104 of the authentication system 22, executing the server application 110, sending a signal to the processing component 58 of the user device 18 to cause the processing component 58 to link the plugin application 34 to the account profile and mark the account profile stored in the memory 66 (e.g., in the secure memory 68) as authenticated.

Referring now to FIG. 5B, shown therein is a process flow diagram of a user authentication process 400 constructed in accordance with the present disclosure. The user authentication process 400 generally comprises the steps of: directing the user to a login screen (step 404); receiving a login request (step 408); and authenticating the user (step 412). The user authentication process 400 may be started, for example, during the native account creation process 200 if the processing component 58 determines that the user 14 is not authenticated in step 208. Alternatively, or additionally, the user authentication process 400 may be started, for example, any time the user 14 is required to log into the plugin application 34.

In one embodiment, directing the user to a login screen (step 404) may include, for example, the processing component 58 displaying a login screen on the primary user interface 30. In some embodiments, the processing component 58 may display the login screen without causing the primary user interface 30 to exit, close, or terminate another application or screen displayed on the output device 54 of the user device 18. In one embodiment, the login screen may be displayed in a browser window or may be displayed in a mobile application.

In one embodiment, receiving a login request (step 408) may include, for example, the processing component 104 receiving one or more input from the user 14, e.g., via the user device 18, and verifying that the one or more input includes valid credentials for the user 14 utilizing the user device 18. For example, the one or more input may include one or more of: a username and password, a passkey, a two-factor authorization code, combinations thereof, and/or the like.

In one embodiment, authenticating the user (step 412) may include the processing component 58 receiving an authentication signal from the processing component 104 indicative of the user 14 providing valid credentials to authenticate the user 14 using the user device 18. In one embodiment, authenticating the user (step 412) may further include the processing component 58 receiving the account profile and one or more user accounts from the processing component 104 of the authentication system 22.

Referring now to FIGS. 6A-B, shown therein are illustrations of exemplary embodiments of the user device of FIG. 2 showing a sequence of the application interface 600 constructed in accordance with the present disclosure. As described in more detail above, the application interface 600 of FIG. 6A shows a button 604 that when selected by the user 14 via the primary user interface 30 causes the native account creation process 200 to be executed while the logged-in application interface 600' shows the user 14 logged into the application interface 600 of FIG. 6A with a native user account. It should be understood that while the user device 18 of FIGS. 6A-B is illustrated as a laptop computer, the user device 18 may be implemented as any user device 18 described above, such as a desktop, tablet, smart phone, eReader, and/or the like.

Referring now to FIGS. 7A-B, in combination, shown in FIG. 7A is a screenshot of an exemplary embodiment of the registration form 700 and shown in FIG. 7B is a screenshot of an exemplary embodiment of an account profile page 720, both constructed in accordance with the present disclosure. As discussed in more detail above, the registration form 700 may include the one or more input fields 704a-n corresponding to the one or more profile properties. The processing component 58 may receive one or more input from the user 14 indicative of a response provided in the one or more input fields 704 and associated with one or more profile properties 724a-n. The processing component 58 may transmit the response associated with the one or more profile property 724 to the processing component 104 upon selection of a submit button 708. The one or more input fields 704 may include the first input field 704a associated with a first name profile property 724a, the second input field 704b associated with a last name profile property 724b, the third input field 704c associated with an email address profile property 724c, the fourth input field 704d associated with the password profile property 724d, and the fifth input field 704e associated with a phone number profile property 724e. In some embodiments, the one or more profile properties 724 may exceed the number of the one or more input fields 704.

In one embodiment, each of the one or more profile properties 724 may be associated with a respective edit input 728a-n that, upon selection by the user 14, may cause the processing component 58 to provide an input field on the primary user interface 30 to allow the user 14 to input a new value for the associated profile property 724. For example, an address profile property 724f may be provided and associated with an edit input 728f on the account profile page 720, but an associated input field 704 may not be provided by the registration form 700. Upon selection of the edit input 728f, the processing component 58 may present an input field to the user 14 via the primary user interface 30. The processing component 58 may receive a property value (e.g., a user address) from the user 14 via the input field and store the received property value in the memory 66 and/or may transmit the received property value to the authentication system 22 and/or cause the processing component 104 of the authentication system 22 to otherwise associate the received property value with the associated profile property and store the same in the memory 108, such as in the database 112.

Referring now to FIG. 7C, shown therein is a screenshot of an exemplary embodiment of an email management interface 740 generated by the server application 110 and displayed on the user device 18 constructed in accordance with the present disclosure. The email management interface 740 may include, for example, a list 744 of one or more user accounts 748a-n associated with one or more third-party systems 24. As shown, each row of the list 744 includes one of the one or more user accounts 748a-d, a first selectable input 752 indicative of allowing email communications, a second selectable input 756 indicative of allowing cellular communications (e.g., text messages and/or phone calls), and a deletion input 760.

In one embodiment, upon selection of the deletion input 760 associated with a particular user account 748 associated with a particular third-party system 24, the processing component 104 may send a deletion signal to the particular third-party system 24, e.g., via the network 26, to cause the particular third-party system 24 to delete, deactivate, or otherwise remove the native user account of the user 14 on the particular third-party system 24 and may, in some embodiments, cause the particular third-party system 24 to delete, deactivate, or otherwise remove the native user account of the user 14 on the particular third-party system 24 without the user 14 interacting with the particular third-party system 24 (e.g., via the user device 18).

This nonconventional arrangement of the authentication system 22 transmitting the deletion signal to the third-party system 24 if the user 14 requests deletion from within the authentication system 22 (instead of the conventional arrangement of the third-party system 24 receiving the deletion signal from the user 14 interacting with the primary user interface 30), may further enable a secure and user-friendly approach to user account management on the third-party system 24.

In one embodiment, the email management interface 740 may further provide additional functionality for managing communication preferences across multiple third-party systems 24. The processing component 58 may receive user input through the primary user interface 30 to modify communication preferences for a selected user account 748. For example, the user 14 may toggle the first selectable input 752 to allow or disallow email communications, or the second selectable input 756 to allow or disallow cellular communications for a particular third-party system 24. Upon receiving such user input, the processing component 58 may transmit the modified communication preferences to the authentication system 22. The processing component 104 of the authentication system 22 may then update account management properties stored in the memory 108 in response to, and in accordance with, receiving the modified communication preferences. This update of the account management properties may include, for example, modifying the filtering rules for the associated proxy email address or adjusting settings for SMS forwarding. The updated communication preferences may then be applied to future communications from the respective third-party system 24, providing the user 14 with granular control over their digital communications across multiple platforms from a single, centralized interface.

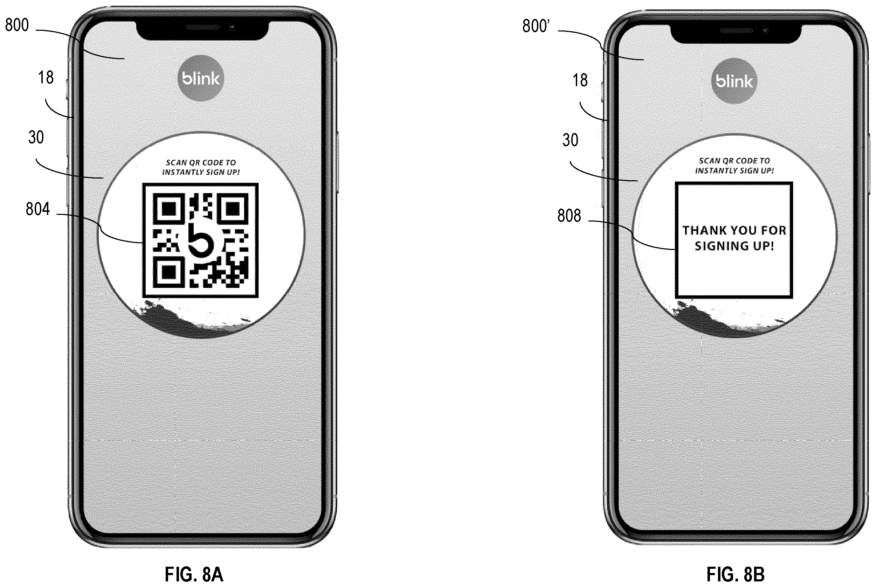

Referring now to FIGS. 8A-B, shown therein are illustrations of exemplary embodiments of the user device 18 of FIG. 2 showing a sequence of a signup interface 800 constructed in accordance with the present disclosure. The signup interface 800 of FIG. 8A shows a quick response code 804 associated with the third-party system 24 on the output device 54, as viewed by the input device 50, that when scanned by the user 14, via the input device 50, causes the native account creation process 200 to be executed. For example, the quick response code may store API information associated with the third-party system 24. Shown in FIG. 8B is a completed signup interface 800' wherein the user 14 has been successfully signed up and logged-in with the native user account. For example, in one embodiment, the user indicating to create the native user account (step 202) of the native account creation process 200 may include the processing component 58 of the user device 18 receiving an indication from the user 14 via the input device 50. For example, the indication from the user 14 may include the user 14 positioning the input device 50 such that the input device 50 has a view of the quick response code 804.

It should be understood that while the user device 18 of FIGS. 8A-B is illustrated as a smart phone, the user device 18 may be implemented as any user device 18 described above, such as a laptop computer, a desktop, a tablet, an eReader, and/or the like. As shown in the sequence between FIG. 8A and FIG. 8B, the native user account for the third-party system 24 may be created without receiving an input from the user 14 other than scanning the quick response code 804 to initiate the native account creation process 200.

This nonconventional arrangement of the authentication system 22 generating a user account and causing the third-party system 24 to create the native user account for the user 14 being instantiated by the user 14 using the user device 18 to scan a quick response code 804 (instead of the conventional arrangement of the third-party system 24 receiving the native user account information from the user 14 interacting with the primary user interface 30), may further enable a secure and user-friendly approach to user account creation and management on the third-party system 24.

### ILLUSTRATIVE CLAUSES

The following are illustrative clauses demonstrating non-limiting implementations of the present disclosure:
Clause 1. A system, comprising: a processing component; an input device; an output device; and a memory comprising a non-transitory processor-readable medium storing processor-executable instructions that when executed by the processing component, causes the processing component to: receive an indication from a user, via the input device, to create a native user account with a third-party system; determine if the user has an account profile registered with an authentication system, the account profile having a plurality of profile properties, the plurality of profile properties including at least an email address; determine a registration status as one of registered and unregistered, wherein in response to the registration status being registered, register the account profile with the authentication system and wherein in response to the registration status being unregistered, determine an authentication status of the user with the authentication system; generate a user account for the third-party system, the user account having user account properties; and transmit the user account properties to the third-party system to create the native user account on the third-party system.
Clause 2. The system of Clause 1, wherein the processor-executable instructions to generate the user account for the third-party system, when executed by the processing component, further cause the processing component to: cause the authentication system to connect to and receive a request from the third-party system indicative of requested user account properties and to generate the user account for the third-party system based on one or more profile properties from the account profile.
Clause 3. The system of any of clauses 1 to 2, wherein the processor-executable instructions to register the account profile with the authentication system, when executed by the processing component, further cause the processing component to: display, on the output device, a primary user interface with a registration form having one or more input fields corresponding to one or more profile properties; receive a response indicative of the one or more profile properties from the one or more input fields; validate the response indicative of the one or more profile properties; and register the account profile with the authentication system.
Clause 4. The system of any of clauses 1 to 3, wherein the processor-executable instructions further cause the processing component to: receive a confirmation from the third-party system indicative of successful creation of the native user account; and store the user account properties in association with an identifier of the third-party system in the memory.
Clause 5. The system of any of clauses 1 to 4, wherein the processor-executable instructions further cause the processing component to: display, on the output device, an email management interface including a list of associated user accounts, each associated user account corresponding with at least one third-party system; receive a user input to modify communication preferences for a selected associated user account; and transmit the modified communication preferences to the authentication system to update account management properties for the corresponding third-party system of the associated user account.
Clause 6. The system of any of clauses 1 to 5, wherein the processor-executable instructions to generate the user account for the third-party system further cause the processing component to: generate a proxy email address different from an email address provided in the one or more profile properties of the account profile, the proxy email address being uniquely generated for the third-party system; and provide the proxy email address as at least one of the user account properties of the user account.
Clause 7. The system of any of clause 6, wherein the processor-executable instructions further cause the processing component to: associate the proxy email address with the native user account on the third-party system; and display the proxy email address on the primary user interface as part of a user account information for the third-party system.
Clause 8. The system of any of clauses 6 to 7, wherein the processor-executable instructions further cause the processing component to: receive an email directed to the proxy email address; filter the received email; and forward the filtered email to the email address provided in the plurality of profile properties of the account profile.
Clause 9. The system of any of clauses 1 to 8, wherein the processor-executable instructions further cause the processing component to: provide the primary user interface on the output device for managing the account profile, the primary user interface including options for one or more of: updating profile information, managing payment methods, managing user accounts, and setting communication preferences.
Clause 10. The system of any of clauses 1 to 9, wherein the processor-executable instructions further cause the processing component to: display on the output device a primary user interface having an application interface with a button; and wherein the processor-executable instructions to receive the indication from the user further cause the processing component to: receive the indication from the user interacting with the button of the primary user interface on the output device.
Clause 11. The system of any of clauses 1 to 10, wherein the processor-executable instructions further cause the processing component to: display on the output device a primary user interface having an application interface with a quick response code; and wherein the processor-executable instructions to receive the indication from the user further cause the processing component to: receive the indication from the user positioning the input device such that the input device has a view of the quick response code.
Clause 12. The system of any of clauses 1 to 11, wherein the processor-executable instructions to receive the indication from the user further cause the processing component to: capture, via the input device, an image of a quick response code; decode the quick response code to extract API information associated with the third-party system; and cause the third-party system to send a user account generation request to the authentication system.
Clause 13. The system of any of clauses 1 to 12, wherein the processor-executable instructions further cause the processing component to: receive a deletion request from the user for the native user account on the third-party system; transmit a deletion signal to the third-party system to cause the third-party system to delete the native user account; and update the stored user account properties to reflect the deletion of the native user account.
Clause 14. The system of any of clauses 1 to 13, wherein the processor-executable instructions further cause the processing component to: receive, from the third-party system, a list of required and optional user account properties; and generate the user account with only the required user account properties to minimize data shared with the third-party system.
Clause 15. A system, comprising: a processing component; an input device; an output device; and a memory comprising a non-transitory processor-readable medium storing processor-executable instructions that when executed by the processing component, causes the processing component to: receive an indication from a user, via the input device, to log into a native user account with a third-party system; and in response to determining that an account profile for the user is authenticated to an authentication system, transmit a signal to the third-party system to cause the third-party system to request login credentials from the authentication system.
Clause 16. The system of clause 15, wherein the processor-executable instructions further cause the processing component to: display on the output device an application interface associated with the third-party system, the application interface having at least a button; and wherein the processor-executable instructions to receive the indication from the user further cause the processing component to: receive the indication from the user interacting with the button of the primary user interface on the output device.
Clause 17. The system of any of clauses 15 to 16, wherein the processor-executable instructions further cause the processing component to: display on the output device an application interface associated with the third-party system, the application interface having at least a quick response code; and wherein the processor-executable instructions to receive the indication from the user further cause the processing component to: receive the indication from the user positioning the input device such that the input device has a view of the quick response code.
Clause 18. The system of any of clauses 15 to 17, wherein the processor-executable instructions further cause the processing component to: receive, from the third-party system, a request for additional authentication; present, via the output device, an additional authentication prompt to the user; and transmit a response to the additional authentication prompt to the third-party system.
Clause 19. The system of any of clauses 15 to 18, wherein the processor-executable instructions further cause the processing component to: receive a redirect instruction from the third-party system; in response to the redirect instruction, display a logged-in application interface of the third-party system on the output device; and update a login indicator on the displayed interface to show that the user is logged into the native user account on the third-party system.
Clause 20. A method for managing user accounts across multiple third-party systems, the method comprising: receiving, by a processing component, an indication from a user to perform an account action with a third-party system, the account action being one of creating a native user account or logging into an existing native user account; determining, by the processing component, if the user has an authenticated account profile with an authentication system; if the account action is creating a native user account: generating a user account for the third-party system, the user account having user account properties based on profile properties from the authenticated account profile; and transmitting the user account properties to the third-party system to create the native user account; and if the account action is logging into an existing native user account: transmitting a signal to the third-party system to request login credentials from the authentication system; and receiving a confirmation from the third-party system that the account action was successful; and updating a database of user account associations to reflect the account action performed with the third-party system.
Clause 21. A system, comprising: a processing component; an input device; an output device; and a memory comprising a non-transitory processor-readable medium storing processor-executable instructions that when executed by the processing component, causes the processing component to: receive an indication from a user, via the input device, to create a native user account with a third-party system; determine if the user has an account profile registered with an authentication system, the account profile having a plurality of profile properties, the plurality of profile properties including at least an email address; if the user does not have the account profile registered, register the account profile with the authentication system; if the user is registered, determine if the user is authenticated with the authentication system; generate a user account for the third-party system, the user account having user account properties; and transmit the user account properties to the third-party system to create the native user account on the third-party system.
Clause 22. The system of Clause 21, wherein the processor-executable instructions to generate the user account for the third-party system, when executed by the processing component, further cause the processing component to: cause the authentication system to connect to and receive a request from the third-party system indicative of requested user account properties and to generate the user account for the third-party system based on one or more profile properties from the account profile.
Clause 23. The system of any of clauses 21 to 22, wherein the processor-executable instructions to register the account profile with the authentication system, when executed by the processing component, further cause the processing component to: display, on the output device, a primary user interface with a registration form having one or more input fields corresponding to one or more profile properties; receive a response indicative of the one or more profile properties from the one or more input fields; validate the response indicative of the one or more profile properties; and register the account profile with the authentication system.
Clause 24. The system of any of clauses 21 to 23, wherein the processor-executable instructions further cause the processing component to: receive a confirmation from the third-party system indicative of successful creation of the native user account; and store the user account properties in association with an identifier of the third-party system in the memory.
Clause 25. The system of any of clauses 21 to 24, wherein the processor-executable instructions further cause the processing component to: display, on the output device, an email management interface including a list of associated user accounts, each associated user account corresponding with at least one third-party system; receive a user input to modify communication preferences for a selected associated user account; and transmit the modified communication preferences to the authentication system to update account management properties for the corresponding third-party system of the associated user account.
Clause 26. The system of any of clauses 21 to 25, wherein the processor-executable instructions to generate the user account for the third-party system further cause the processing component to: generate a proxy email address different from an email address provided in the one or more profile properties of the account profile, the proxy email address being uniquely generated for the third-party system; and provide the proxy email address as at least one of the user account properties of the user account.
Clause 27. The system of any of clause 26, wherein the processor-executable instructions further cause the processing component to: associate the proxy email address with the native user account on the third-party system; and display the proxy email address on the primary user interface as part of a user account information for the third-party system.
Clause 28. The system of any of clauses 26 to 27, wherein the processor-executable instructions further cause the processing component to: receive an email directed to the proxy email address; filter the received email; and forward the filtered email to the email address provided in the plurality of profile properties of the account profile.
Clause 29. The system of any of clauses 21 to 28, wherein the processor-executable instructions further cause the processing component to: provide the primary user interface on the output device for managing the account profile, the primary user interface including options for one or more of: updating profile information, managing payment methods, managing user accounts, and setting communication preferences.
Clause 30. The system of any of clauses 21 to 29, wherein the processor-executable instructions further cause the processing component to: display on the output device a primary user interface having an application interface with a button; and wherein the processor-executable instructions to receive the indication from the user further cause the processing component to: receive the indication from the user interacting with the button of the primary user interface on the output device.
Clause 31. The system of any of clauses 21 to 30, wherein the processor-executable instructions further cause the processing component to: display on the output device a primary user interface having an application interface with a quick response code; and wherein the processor-executable instructions to receive the indication from the user further cause the processing component to: receive the indication from the user positioning the input device such that the input device has a view of the quick response code.
Clause 32. The system of any of clauses 21 to 31, wherein the processor-executable instructions to receive the indication from the user further cause the processing component to: capture, via the input device, an image of a quick response code; decode the quick response code to extract API information associated with the third-party system; and cause the third-party system to send a user account generation request to the authentication system.
Clause 33. The system of any of clauses 21 to 32, wherein the processor-executable instructions further cause the processing component to: receive a deletion request from the user for the native user account on the third-party system; transmit a deletion signal to the third-party system to cause the third-party system to delete the native user account; and update the stored user account properties to reflect the deletion of the native user account.
Clause 34. The system of any of clauses 21 to 33, wherein the processor-executable instructions further cause the processing component to: receive, from the third-party system, a list of required and optional user account properties; and generate the user account with only the required user account properties to minimize data shared with the third-party system.

### CONCLUSION

The foregoing description provides illustration and description, but is not intended to be exhaustive or to limit the inventive concepts to the precise form disclosed. Modifications and variations are possible in light of the above teachings or may be acquired from practice of the methodologies set forth in the present disclosure.

From the above description, it is clear that the inventive concept(s) disclosed herein are well adapted to carry out the objects and to attain the advantages mentioned herein, as well as those inherent in the inventive concept(s) disclosed herein. While the embodiments of the inventive concept(s) disclosed herein have been described for purposes of this disclosure, it will be understood that numerous changes may be made and readily suggested to those skilled in the art which are accomplished within the scope of the inventive concept(s) disclosed herein.

Even though particular combinations of features are recited in the claims, illustrative clauses, and/or disclosed in the specification, these combinations are not intended to limit the disclosure. In fact, many of these features may be combined in ways not specifically recited in the claims, illustrative clauses, and/or disclosed in the specification. Although each dependent claim listed below may directly depend on only one other claim, the disclosure includes each dependent claim in combination with every other claim in the claim set.

No element, act, or instruction used in the present application should be construed as critical or essential to the invention unless explicitly described as such outside of the preferred embodiment. Further, the phrase "based on" is intended to mean "based, at least in part, on" unless explicitly stated otherwise.

## Claims

1. A system, comprising:
a processing component;
an input device;
an output device; and
a memory comprising a non-transitory processor-readable medium storing processor-executable instructions that when executed by the processing component, causes the processing component to:
receive an indication from a user, via the input device, to create a native user account with a third-party system;
determine if the user has an account profile registered with an authentication system, the account profile having a plurality of profile properties, the plurality of profile properties including at least an email address;
determine a registration status as one of registered and unregistered, wherein in response to the registration status being registered, register the account profile with the authentication system and wherein in response to the registration status being unregistered, determine an authentication status of the user with the authentication system;
generate a user account for the third-party system, the user account having user account properties; and
transmit the user account properties to the third-party system to create the native user account on the third-party system.

2. The system of claim 1, wherein the processor-executable instructions to generate the user account for the third-party system, when executed by the processing component, further cause the processing component to:
cause the authentication system to connect to and receive a request from the third-party system indicative of requested user account properties and to generate the user account for the third-party system based on one or more profile properties from the account profile.

3. The system of claim 1, wherein the processor-executable instructions to register the account profile with the authentication system, when executed by the processing component, further cause the processing component to:
display, on the output device, a primary user interface with a registration form having one or more input fields corresponding to one or more profile properties;
receive a response indicative of the one or more profile properties from the one or more input fields;
validate the response indicative of the one or more profile properties; and
register the account profile with the authentication system.

4. The system of claim 1, wherein the processor-executable instructions further cause the processing component to:
receive a confirmation from the third-party system indicative of successful creation of the native user account; and
store the user account properties in association with an identifier of the third-party system in the memory.

5. The system of claim 1, wherein the processor-executable instructions further cause the processing component to:
display, on the output device, an email management interface including a list of associated user accounts, each associated user account corresponding with at least one third-party system;
receive a user input to modify communication preferences for a selected associated user account; and
transmit the modified communication preferences to the authentication system to update account management properties for the corresponding third-party system of the associated user account.

6. The system of claim 1, wherein the processor-executable instructions to generate the user account for the third-party system further cause the processing component to:
generate a proxy email address different from an email address provided in the one or more profile properties of the account profile, the proxy email address being uniquely generated for the third-party system; and
provide the proxy email address as at least one of the user account properties of the user account.

7. The system of claim 6, wherein the processor-executable instructions further cause the processing component to:
associate the proxy email address with the native user account on the third-party system; and
display the proxy email address on the primary user interface as part of a user account information for the third-party system.

8. The system of claim 6, wherein the processor-executable instructions further cause the processing component to:
receive an email directed to the proxy email address;
filter the received email; and
forward the filtered email to the email address provided in the plurality of profile properties of the account profile.

9. The system of claim 1, wherein the processor-executable instructions further cause the processing component to:
provide the primary user interface on the output device for managing the account profile, the primary user interface including options for one or more of: updating profile information, managing payment methods, managing user accounts, and setting communication preferences.

10. The system of claim 1, wherein the processor-executable instructions further cause the processing component to:
display on the output device a primary user interface having an application interface with a button; and
wherein the processor-executable instructions to receive the indication from the user further cause the processing component to:
receive the indication from the user interacting with the button of the primary user interface on the output device.

11. The system of claim 1, wherein the processor-executable instructions further cause the processing component to:
display on the output device a primary user interface having an application interface with a quick response code; and
wherein the processor-executable instructions to receive the indication from the user further cause the processing component to:
receive the indication from the user positioning the input device such that the input device has a view of the quick response code.

12. The system of claim 1, wherein the processor-executable instructions to receive the indication from the user further cause the processing component to:
capture, via the input device, an image of a quick response code;
decode the quick response code to extract API information associated with the third-party system; and
cause the third-party system to send a user account generation request to the authentication system.

13. The system of claim 4, wherein the processor-executable instructions further cause the processing component to:
receive a deletion request from the user for the native user account on the third-party system;
transmit a deletion signal to the third-party system to cause the third-party system to delete the native user account; and
update the stored user account properties to reflect the deletion of the native user account.

14. The system of claim 1, wherein the processor-executable instructions further cause the processing component to:
receive, from the third-party system, a list of required and optional user account properties; and
generate the user account with only the required user account properties to minimize data shared with the third-party system.

15. A system, comprising:
a processing component;
an input device;
an output device; and
a memory comprising a non-transitory processor-readable medium storing processor-executable instructions that when executed by the processing component, causes the processing component to:
receive an indication from a user, via the input device, to log into a native user account with a third-party system; and
in response to determining that an account profile for the user is authenticated to an authentication system, transmit a signal to the third-party system to cause the third-party system to request login credentials from the authentication system.
